# EUROPEAN PATENT APPLICATION

(11) **EP 1 767 269 A2**
(43) Date of publication of application: **28.03.2007**
(21) Application number: 06254578.5
(22) Date of filing: 01.09.2006
(51) Int. Cl.: B01J 23/38, B01J 23/40, B01J 23/56, B01J 23/63, B01J 37/02, B01J 35/00, B01J 37/16

(54) **Method for producing catalyst**

(30) Priority: 27.09.2005 JP 2005279390
(71) Applicant: Tanaka Kikinzoku Kogyo K.K., Tokyo 100-6422 (JP)
(72) Inventor: Saito, Masayuki, Tanaka Kikinzoku Kogyo K.K., Hiratsuka-shi Kanagawa 254-0076 (JP)
(74) Representative: Moy, David

(57) **Abstract**

The present invention provides a method for producing a catalyst in which a porous carrier made of one or more metal oxides or carbon supports thereon catalyst particles comprising one or more precious metals and one or more typical elements or rare earth metal elements or oxides of these elements, the method including the steps of: (1) forming a composite complex in which the precious metal(s) and the typical element(s) or the rare earth metal element(s) are bonded to the polymer compound through coordination bonding, ionic bonding or covalent bonding, the complex comprising 10 to 50000 atoms in total of these elements in one molecule thereof, by reacting a water soluble polymer compound with ions of the precious metal(s) and ions of the typical element(s) or the rare earth metal element(s); (2) supporting the composite complex on the porous carrier; and (3) firing and/or reducing the porous carrier with the composite complex supported thereon.

## Description

### BACKGROUND OF THE INVENTION

### FIELD OF THE INVENTION

The present invention relates to a method for producing a catalyst. In particular, the present invention relates to a method for producing a catalyst in which a carrier can support thereon catalyst particles, including two or more types of elements, made to form a composite system having an appropriate number of atoms and appropriate particle sizes.

### DESCRIPTION OF THE RELATED ART

Catalysts are used in a large number of fields including various fields such as acceleration of reactions in syntheses of compounds and in fuel cells, and purification of various gases. Most of the catalysts having hitherto been widely used include, as the carriers thereof, porous bodies made of metal oxides such as alumina and silica and carbon, and active metals, in particular, precious metals such as platinum, palladium and rhodium supported on these carriers. Recently, there have been commonly used multi-component catalysts in which catalyst particles each including a plurality of precious metals are supported and alloyed for the purpose of improving the activity. Frequently occur the cases in which alloying of catalyst particles leads to the interactions between the constituent elements to result in the activity improvement that cannot be found in catalysts each having a single metal supported therein. It has also been identified that the use of a plurality of precious metals as catalyst particles in a composite manner suppresses the deactivation owing to the improved interaction of the precious metals with the carrier.

In conventional methods for producing catalysts, catalysts are produced as follows: porous carriers are impregnated with solutions of metal salts such as dinitrodiammineplatinum, chloroplatinic acid and rhodium nitrate to support atomic metals on the carriers and the carriers thus treated are fired in a reductive atmosphere to yield catalysts; multi-component catalysts are also produced as follows: a solution of metal salts of two or more metals to be supported is prepared, the solution and a carrier are mixed together to adsorb ions of the two or more metals onto the carrier, and thereafter the carrier is dried and fired. This is because, in any of these above-described production methods, the carrier supporting the precious metal salts has atomic metals supported thereon, and the firing of the carrier thus treated results in migration and agglomeration of the atomic metals to lead to particle sizes sufficient to function as catalyst particles (see Japanese Patent Application Laid-Open No. 60-50491 and Japanese Patent Publication No. 63-116741).

Here, it should be noted that the catalytic activity is more significantly affected by the conditions of the catalyst particles with the same type of metal and the same loading of the metal; more specifically, as compared to the catalysts in which atomic metals are dispersed and supported, higher catalyst activities are attained by those catalysts in which metal atoms are agglomerated to form clusters of the order of 10 to 50000 (1 to 10 nm in particle size) in the number of atoms and such clusters are uniformly supported on the carrier. Those catalyst particles in which two or more types of metals are supported are also required that the compositions constituting the individual catalyst particles be uniform.

However, these requirements have not completely been met by the above production methods in which solutions of metal salts are used as precursors to be supported. In the conventional production methods, atomic metals are supported randomly on the carriers, and consequently heat treatment can hardly make perfect control of the catalyst particle sizes to result in nonuniform catalyst particle sizes as the case may be.

In conventional production methods, alloying of catalyst metals frequently tends to be insufficient. For alloying, it is necessary that the constituent elements be close to each other at an atomic level, but in the conventional methods, when two or more atomic metals are supported, the atomic metals tend to be nonuniformly distributed on the carrier owing to the difference in the zeta potential (difference in adsorption strength) or the like. When heat treatment is made under such conditions, metals having strong adsorption strength tend to be adsorbed on the carrier surface, but metals having weak adsorption strength are hardly adsorbed on the carrier surface and tend to diffuse into the pores of the carrier. Consequently, firing of the carrier under such conditions cannot form uniformly alloyed catalyst particles.

Accordingly, there has recently been known an attempt to apply a metal colloid solution as a precursor (for example, see Japanese Patent Application Laid-Open No. 11-151436) in a contrast to the conventional methods for producing catalysts in which solutions of metal salts (atomic metals) are used as the precursors for the catalyst particles. A metal colloid solution means a solution in which 1 to 10 nm metal particles (colloid particles) made of one or more metals are dispersed in a solvent such as water. An advantage provided by applying a metal colloid to a method for producing a catalyst is such that the use of a metal colloid permits forming catalyst particles in a preferable state immediately after supporting, and consequently it is not necessarily required that after supporting, particle sizes are regulated or a heat treatment is carried out for alloying the metals. This is due to the fact that a metal colloid has metal particles formed to have appropriate particle size of 1 to 10 nm already at the stage of the precursor, and two or more metals can form a state of being mixed together at a nano level in such a way that the individual colloid particles are uniform in composition.

When a metal colloid solution is prepared, a metal salt of one target metal or metal salts of two or more target metals are dissolved in a solvent, and the metal ions in the solvent are reduced with appropriate reducing agents to form metal particles. A metal colloid solution usually contains a compound referred to as a protective agent (examples of the protective agent may include organic compounds such as polyvinylpyrrolidone and polyacrylic acid) in order to protect the particle conditions of the reduced metal particles and simultaneously inhibit the mutual agglomeration of the metal particles. A protective agent is usually added simultaneously with dissolving the metal salts in the solvent, and when the metal ions in the solvent are reduced to metal particles, the protective agent protects the metal particles in such a way that the protective agent is adsorbed onto the metal particles to surround the metal particles owing to the interaction with the metal particles. Further, the effect of the protective agent is such that the particle sizes of the metal particles are maintained until the metal particles are supported onto the carrier and thus the catalyst particles are formed.

When multi-component catalysts are produced by use of metal colloids, combinations of precious metals, for example, combinations of platinum and palladium, and platinum and rhodium, play a central role. This is due to a fact that composite system formation and alloying of metals resembling each other in behavior in a solvent are relatively easy, and catalysts adopting precious metals have been highly demanded from the viewpoint of catalytic activity.

However, recently there have been made studies on new catalysts in which precious metals and elements other than precious metals are supported although the number of such studies is still small. In such a new catalyst, precious metals are used as main catalyst components to attain the catalytic activity, and other elements are supported in a composite manner as auxiliary catalyst components to attain additional functions such as durability. For example, in a catalyst (hereinafter, referred to as platinum/ceria supported catalyst) that is an automobile exhaust gas catalyst, and platinum and ceria are supported on a porous carrier, the atmosphere in the exhaust gas is controlled by the oxygen absorption/release ability of ceria as an additional function of the ceria, so that the catalyst is known as a catalyst that can contribute to an improvement of the removal efficiency of harmful components. In the platinum/ceria supported catalyst, platinum and ceria are not alloyed, but it is necessary to support platinum and ceria to be close to each other, and the effect of ceria is known to be thereby attained. As the example of the platinum/ceria supported catalyst, there is a possibility that catalysts in which rare earth elements such as cerium or typical elements such as lead and gallium are added to precious metals are demanded in the future in the field of catalysts.

However, according to the present inventor, it is difficult to apply metal colloids to the production of multi-component catalysts in which such a precious metal and a typical element or a rare earth element are supported. This is ascribable to the following facts: when the aforementioned method for preparing a metal colloid is adopted, it is a prerequisite that the precious metal and the typical element or the rare earth element be simultaneously subjected to reduction treatment in a solvent and colloid particles be able to be prepared in which these metal and element are uniformly mixed; however, many of the typical elements and many of the rare earth elements are not reduced to remain dispersed as ions in the solvent even when reduction treatment is applied, and consequently cannot form colloid particles.

Accordingly, an object of the present invention is to provide a method for producing a multi-component catalyst in which catalyst particles are supported in such a way that the catalyst particles are formed by alloying a precious metal with a typical element or a rare earth element as a cocatalytic component or in which a typical element or a rare earth element is supported in proximity to the precious metal, wherein the composition involving the precious metal and the cocatalytic component can be made uniform, and the catalyst particles having preferable particle sizes can be formed.

### SUMMARY OF THE INVENTION

The present inventor has made a diligent study in order to solve the above described problems, and consequently discovered an application of metal composite complexes including precious metals and typical elements or rare earth elements as the precursors for the catalyst particles instead of conventional solutions of metal salts and metal colloids.

Specifically, the present invention is a method for producing a catalyst in which a porous carrier made of one or more metal oxides or carbon supports thereon catalyst particles comprising one or more precious metals and one or more typical elements or rare earth metal elements or oxides of these elements and comprising 10 to 50000 atoms in total, the method comprising the following steps of:
(1) forming a composite complex in which the precious metal(s) and the typical element(s) or the rare earth metal element(s) are bonded to the polymer compound through coordination bonding, ionic bonding or covalent bonding, the composite complex comprising 10 to 50000 atoms in total in one molecule thereof, by reacting a water soluble polymer compound with the ions of the precious metal(s) and ions of the typical element(s) or the rare earth metal element(s);
(2) supporting the composite complex on the porous carrier; and
(3) calcining and/or reducing the porous carrier with the composite complex supported thereon.

The present invention is characterized in that composite complexes in which precious metals and typical elements or rare earth elements each in an ionic state are bonded to polymer compounds are dispersed in solutions, and these solutions are used as the precursors of the catalyst particles. This is different from the above described supporting of the solutions of metal salts in which the precursors are the atomic metals dispersed alone (without forming complexes), and is different from the above described metal colloids in which the precursors are the dispersed particles each in a state of a reduced metal.

Now, detailed description will be made below on the method for producing a catalyst according to the present invention. In the present invention, first, a composite complex is formed. For the purpose of forming the composite complex, it becomes necessary to react a water soluble polymer compound, as described above, with the ions of a precious metal and the ions of a typical element or a rare earth metal element.

The polymer compound, which is an important component to constitute the composite complex, is a water soluble polymer compound capable of bonding to a precious metal and the like through coordination bonding, ionic bonding and covalent bonding. The polymer compound preferably has in the molecule thereof at least any one of a nitrogen atom, a carboxyl group, a carbonyl group and an alcohol group. This is because these element and substituents exert interactions to form bonds with the ions of the precious metal and the ions of the typical element or the rare earth element. The possible types of bonds include the coordination bond and the ionic bond for the case of a nitrogen atom, and the ionic bond and the covalent bond for the case of a carboxyl group; an appropriate complex is designed to be formed in consideration of the affinities between the bonding elements and polymer and the carrier.

Preferable specific examples of the polymer compound may include polyethyleneimine (hereinafter abbreviated as PEI as the case may be), polyacrylic acid, polymethacrylic acid, polyallylamine, polyvinyl alcohol, poly(N-carboxymethyl)ethyleneimine, poly(N,N-dicarboxymethyl)allylamine and a copolymer involving these compounds; and a polyamino acid and a polysaccharide.

The number of the atoms of the precious metal and the atoms of the typical element or the atoms of the rare earth element determines the number of the atoms (particle size) in each of the catalyst particles to be formed subsequently. The present invention adopts a prerequisite that the number of the atoms in a composite complex be set at 10 to 50000. The number of the atoms in a composite complex can be regulated by the molecular weight of the polymer compound. A regulation of the number of the atoms in a composite complex may be described as follows for a particular case in which PEI, for example, is used as the polymer compound.

When a composite complex is formed by use of PEI, the ions of the precious metal and the like are coordination-bonded to the nitrogen atoms in PEI in such a way that one atom is coordination-bonded to two ethyleneimine monomer molecules. From the fact that the molecular weight of the ethyleneimine monomer is 43.07, a PEI having a molecular weight of 50000, for example, is found to have a polymerization degree of 1160 (50000 ÷ 43.07) (to be composed of approximately 1160 ethyleneimine monomer molecules). Accordingly, when a PEI having a molecular weight of 50000 is reacted in just proportion with these atoms, a complex can be formed by a reaction of 580 atoms per PEI molecule.

Accordingly, when a PEI having a molecular weight of 50000 is used, it may be understood that one molecule of PEI as a whole can be coordinated with 580 atoms to form a complex molecule. However, according to the present inventor, such a simple proportion does not lead to a composite complex capable of being used as the precursor for formation of a catalyst. This is because the nitrogen atoms in PEI offer the sites to maintain the water solubility of the polymer compound; coordination of atoms to all the nitrogen sites (in other words, atoms are reacted in just proportion with PEI) deprives the complex of the water solubility to generate precipitate and thus inhibits the use of the complex in a state of a solution.

In other words, preferred in the present invention is a reaction in which the composite complex is coordinated with the necessary amount of atoms, and simultaneously, the amount of the polymer compound is excessive for the purpose of ensuring the water solubility of the complex to maintain a state of a solution. Here, it should be noted that the state in which the amount of the polymer compound is excessive does not simply mean that the molecular weight of the polymer compound is made excessively larger, but rather preferably means a state in which a state of the excessive polymer compound is created by regulating the number of the molecules (the number of moles) of the polymer compound in combination with the regulation of the molecular weight of the polymer compound. In other words, with reference to the above described example of PEI, the molecular weight of 50000 of PEI preferably leads to a proportion such that PEI is mixed with the atoms in a ratio of one atom to 4 or more nitrogen atoms for the purpose of ensuring the water solubility of the complex. The mixing at this ratio leads to a formation of a composite complex in which 290 atoms are coordinated to one molecule of PEI (the uncoordinated excessive nitrogen atoms serve to ensure the water solubility). In this way, clustered catalyst particles each including 290 atoms are formed. When PEI is used as the polymer compound according to the above description, the present invention requires that the number of atoms in the composite complex be set at 10 to 50000; in order to meet such a requirement, the molecular weight of the polymer compound is set at 1000 to 500000, and the mixing amount (the number of molecules) thereof is preferably set to be 3- to 4-fold moles in relation to the total number of the atoms (the total number of the atoms of the precious metal and the typical element or the rare earth element).

The above description is also applicable to other polymer compounds. For example, polyallylamine (monomer molecular weight: 57.09) has a structure similar to that of PEI and forms a composite complex through coordination bonding at the nitrogen sites thereof. Accordingly, as the above case of PEI, for the purpose of forming a composite complex in which 290 atoms are coordinated to one molecule of polyallylamine, a polyallylamine having a molecular weight of 66000 is preferably mixed in a proportion of 4-fold moles (monomer) in relation to the total number of the atoms. When polyallylamine is used as the polymer compound and the number of the atoms in the composite complex is set at 10 to 50000, the molecular weight of polyallylamine is preferably set at 1200 to 650000 and the mixing amount thereof is preferably set to be 3- to 4-fold moles in relation to the total number of the atoms.

When polyacrylic acid (monomer molecular weight: 72.06) is applied as the polymer compound, the carboxyl groups react with the atoms in such a way that one atom is reacted with 1 to 3 carboxyl groups through interatomic bonding to form a complex. Polyacrylic acid is required to be mixed in an amount of the order of 8-fold moles in relation to the total number of the atoms in order to maintain the water solubility, and consequently, in order to form a complex having the same number of atoms of 290 as above, a polyacrylic acid having a molecular weight of 160000 is preferably mixed in an amount of 8-fold moles (monomer) in relation to the total number of the atoms. When polyacrylic acid is used as the polymer compound, the molecular weight of polyacrylic acid is preferably set at 2000 to 500000 and the mixing amount thereof is preferably set to be 6- to 8-fold moles in relation to the total number of the atoms.

As described above, the present invention regulates the number of the atoms in the composite complex and simultaneously ensures the water solubility of the composite complex by regulating the molecular weight of the polymer compound and the number of the polymer compound molecules.

The precious metals preferred in the present invention are platinum, palladium, rhodium, iridium, gold, silver, ruthenium and osmium. The composite complex may include two or more types of these precious metal atoms. The formation of the complex including two or more types of precious metals is made possible by reacting the two or more types of target precious metal ions with the polymer compound.

The precious metal ions to be bonded to the polymer compound are preferably derived from the salts of the precious metals or the solutions of such salts; specifically, as the metal salts for the production of platinum-containing complexes, the following compounds can be applied: platinum chloride, chloroplatinic acid, potassium chloroplatinate, dinitrodiammineplatinum, tetraammineplatinum chloride, tetraammineplatinum hydroxide, hexaammineplatinum chloride, hexaammineplatinum hydroxide, hexahydroxyplatinic acid, dichlorodiammineplatinum, a 2-aminoethanol coordinated platinum compound, and a 2-aminoacetic acid coordinated platinum compound.

As the metal salts for the production of palladium-containing composite complexes, the following compounds can be applied: palladium chloride, palladium nitrate, dinitrodiamminepalladium, dichlorodiamminepalladium, tetraamminepalladium chloride, tetraamminepalladium hydroxide, a 2-aminoethanol coordinated palladium compound, and a 2-aminoacetic acid coordinated palladium compound.

As the metal salts for the production of ruthenium-containing composite complexes, the following compounds can be applied: ruthenium chloride, ruthenium nitrate, ruthenium acetate, tetranitrosyldiaquaruthenium, hexaammineruthenium nitrate and pentaammineaquaruthenium nitrate.

As the metal salts for the production of rhodium-containing composite complexes, the following compounds can be applied: rhodium chloride, rhodium nitrate, rhodium acetate, pentaammineaquarhodium nitrate, ammonium nitrite rhodate, pentaamminenitrorhodium, triaquarhodium nitrate and hexaammineaquarhodium nitrate.

As the metal salts for the production of gold-containing composite complexes, the following compounds can be applied: chloroauric acid, potassium tetracyanoaurate, tetraamminegold nitrate and ammonium tetranitratoaurate. As the metal salts for the production of silver-containing complexes, silver nitrate, silver acetate, potassium cyanoargentate and silver lactate can be applied.

As the metal salts for the production of iridium-containing composite complexes, the following compounds can be applied: chloroiridic acid, iridium trichloride, hexanitroiridic acid, pentaammineaquairidium nitrate, nitropentaammineiridium nitrite and hexaammineiridium nitrate.

Preferred as the typical elements and the rare earth elements to be cocatalytic components for the catalysts produced in the present invention are the typical elements such as gallium, germanium, arsenic, selenium, indium, tin, antimony, tellurium, thallium, lead, bismuth and polonium; and the rare earth elements such as lanthanum, cerium, neodymium, promethium, samarium, europium, gadolinium, terbium, dysprosium, holmium, erbium, thulium, ytterbium and lutetium. The ions of these elements are preferably derived from the nitrates and acetates or the solutions of these in the case of the rare earth elements, and are preferably derived from the nitrates, acetates and oxo acids (oxo acid salts) or the solutions of these in the case of the typical elements.

No particular constraint is imposed on the addition amounts of the typical element and the rare earth element; the typical element or the rare earth element can be added in such an amount as required to attain the effects of the cocatalytic component. In general, when a catalyst centering on the reactivity of the precious metal is formed, approximately 0.1 to 10 atoms of each of these elements per atom of the precious metal are preferable; in a catalyst such as the platinum/ceria supported catalyst in which the precious metal serves to promote the function of the cocatalytic component, approximately 10 to 100 atoms of each of these elements per atom of the precious metal are preferable.

A specific method for reacting the ions of the precious metal and the ions of the typical element or the rare earth metal element with the polymer compound is preferably such that a polymer compound-containing solution is mixed with a salt of the precious metal or a solution of the salt, and then mixed with the salt of the typical element or the rare earth metal element or a solution of the salt. When solutions are used in this step, water and organic solvents such as alcohols are applicable as the solvents for such solutions, but it is water that is preferable.

In the above specific methods for forming the composite complex, by mixing the solution of the polymer compound with the salt of the precious metal or a solution of the salt, the ligand exchange reaction is caused between the salt of the precious metal and the polymer compound to form the complex between the precious metal and the polymer compound. Then, by mixing the complex-containing solution with the salt of the typical element or the rare earth metal element or a solution of the salt, the ions of the typical element or the rare earth metal element are trapped by the complex to form the composite complex. Here, the addition of the typical element or the rare earth metal element is preferably carried out by means of dropping of the solution of the salt thereof. When a salt (solid) is added as it is, if the salt is scarcely soluble in water, the salt slowly reacts with the polymer while contacting and reacting with the polymer, and a uniform complex is thereby formed; however, if the salt is easily soluble in water, the reaction rapidly proceeds between the salt and the polymer to result in a nonuniform formation reaction of the composite complex, and the number of the atoms forming the composite complex is varied as the case may be. Also, even when a solution of the salt is dropped, the dropping rate is preferably regulated to be slow according to the scale of the reaction solution and the concentration of the salt solution for the purpose of making uniform the generation reaction of the composite complex.

After the composite complex has been formed by carrying out the above described steps, the composite complex is supported on a metal oxide carrier or a porous carrier made of carbon. In the present invention, no particular constraint is imposed on the type of the metal oxide; applicable are alumina, silica, zirconia, and additionally, applicable are mixtures of rare earth metal oxides such as ceria-containing carriers including a ceria-zirconia mixed oxide and a ceria-zirconia-yttria mixed oxide. The carrier may include at least one of aluminum, zirconium, silicon, titanium, lanthanum, cerium, neodymium and yttrium. According to the present invention, with any carrier, catalyst particles in a preferred state can be supported. The form of a carrier may be a pellet or a honeycomb as well as a powder.

No particular constraint is imposed on the method for supporting the composite complex on the carrier, in such a way that a carrier powder may be added to a solution of the composite complex, or there may be adopted a mode in which a solution of the composite complex is dropped into a dispersion liquid (slurry) containing the carrier powder as dispersed therein. Supporting may be carried out while the pH of the composite complex solution is being regulated by adding ammonia or nitric acid. No particular constraint is imposed also on the mixing amount of the carrier in such a way that the carrier may be added in such a quantity as required as a catalyst.

The carrier after supporting the composite complex is subjected to a calcining treatment and/or a reduction treatment. In the present invention, immediately after the supporting of the composite complex, the atoms constituting the catalyst particles are supported in a state of being agglomerated in a preferable number of atoms; thus the calcining treatment of such a carrier migrates the catalytic particles, so that clustered catalyst particles can be easily formed. The conditions of the calcining treatment are preferably such that the calcination temperature falls within a range from 300 to 500°C where the polymer compound can be removed by burning.

Alternatively, clustered alloy catalyst particles can also be formed by subjecting the carrier after supporting the composite complex to a reduction treatment to reduce the metal ions on the carrier. In this way, the production of a catalyst that can be expected to have a high activity is made implementable.

Preferred as the reduction treatment method is a method that is based on addition of a reducing agent. Applicable as the reducing agent are hydrogen, formic acid, ethanol, methanol, propanol, butanol, formaldehyde, sodium borohydride, hydrazine, dimethylamine borane and trimethylamine borane.

For addition of the reducing agent, the complex solution containing the carrier is filtered to collect the carrier, and then the carrier may be brought into contact with the reducing agent. In such an operation, a gas such as hydrogen or carbon monoxide may be applied as the reducing agent. The advantages of the dry reduction include an advantage that the dry reduction is extremely favored in terms of energy when heating is made for reduction because dry reduction requires only heating of the powder in a contrast to the fact that wet reducing requires even heating of water, and an advantage that the reaction vessel for reduction may be small in volume. Further, dry reduction permits reduction by heating to a temperature of 100°C or higher, which facilitates the reduction of lead and tin in the presence of a precious metal.

Alternatively, a reducing agent may be added directly to a complex solution containing the carrier. In this way, one solution system permits a sequence of operations including the complex formation, the supporting of the complex and the reduction treatment, thus extremely increasing the production efficiency of the catalyst. In such a case, reduction is preferably carried out by using a reducing agent having a relatively strong reducing power such as sodium borohydride or formic acid. This is because the use of a reducing agent having a strong reducing power can decrease the reduction temperature and the reduction time. In the present invention, agglomerated various atoms are immobilized on the carrier and then reduced, so that even the use of a strong reducing agent does not disturb the stability of the clustered particles and does not cause abnormal agglomeration leading to formation of coarse and large catalyst particles.

There may be carried out any one or both of the above described calcining treatment and reduction treatment. When both firing and reduction are carried out, any of firing and reduction may be carried out first. Whether these post-treatments are necessary or not is dependent on the catalyst to be produced; the platinum/ceria supported catalyst is intended to make platinum and ceria close to each other, and such a catalyst has only to be fired. For a catalyst in which the precious metal and the cocatalytic component are intended to be alloyed with each other, the reduction treatment is carried out after supporting to make the precious metal and the cocatalytic component form an alloy in a metallic state.

As described above, the method according to the present invention makes it possible to easily produce a multi-component catalyst in which the precious metal, and the typical element or the rare earth element are made to form a composite system. In this case, the catalyst particles on the carrier each uniformly include the constituent atoms and become particles having appropriate particle size (number of atoms). According to the present invention, there can be efficiently produced the catalyst particles in which the precious metal and the typical element or the rare earth element are alloyed with each other, or the catalyst in which the catalyst particles made of the precious metal and the catalyst particles made of the typical element or the rare earth element are supported so as to be close to each other. The advantageous effects of the present invention are ascribable to the use of the above described composite complex as the precursor of the catalyst particles. The number of the atoms in the composite complex can be regulated on the basis of the molecular weight and the reaction extent of the polymer compound.

### BEST MODE FOR CARRYING OUT THE INVENTION

In the following, preferred Examples of the present invention will be described with Comparative Examples.

### Example 1

A 50% aqueous solution of polyethyleneimine (average molecular weight: 50000) was weighed out in an amount of 4.32 g (50.12 mmol), and was added with 50 mL of water and stirred. This PEI solution was added with 2.188 g (9.40 mmol) of crystalline dinitrodiamminepalladium (Pd content: 45.7% by weight) and stirred at room temperature for 1 hour. Herewith, there occurred a ligand exchange reaction between dinitrodiamminepalladium and PEI to form a PEI-palladium complex. Then, into this PEI-palladium complex solution, a solution in which 1.04 g (3.13 mmol) of lead nitrate was dissolved in 50 mL of water was dropped at a rate of 1 mL/min. Thus, a PEI-palladium/lead composite complex was formed. This complex maintained water solubility, and no generation of precipitate was observed.

On the other hand, 98.35 g of silica as a carrier was dispersed in 200 mL of water, and into the carrier slurry thus prepared, the solution of the composite complex was dropped and the mixture thus prepared was stirred for 1 hour. Thus, the composite complex was supported on silica by adsorption. This solution was filtered and the silica thus treated was dried at 110°C in air overnight.

After drying, the carrier with the composite complex supported thereon was calcined at 450°C for 2 hours, and further, reduced in a 3% hydrogen (balance gas: nitrogen) at 250°C. By carrying out the above described steps, a 1 wt% Pd - 0.65 wt% Pb/SiO₂ catalyst was obtained.

### Comparative Example 1

Here, an attempt was made to produce the same Pd-Pb/SiO₂ catalyst as in Example 1 by directly supporting a metal salt solution (atomic metal) on a carrier, and by firing the carrier thus treated. First, 22.73 g of a dinitrodiamminepalladium nitrate solution (Pd content: 4.40% by weight) and 1.04 g of lead nitrate were dissolved in water to prepare a 100 mL solution. Then, 98.35g of silica was dispersed in 200 mL of water to prepare a carrier slurry, the metal salt solution was dropped into this carrier slurry, and the mixture was stirred for 1 hour and then evaporated to dryness on a water bath.

The powder thus obtained was dried in air at 110°C overnight, calcined at 450°C for 2 hours, and further reduced in 3% hydrogen at 250°C. By carrying out these steps, a 1 wt% Pd - 0.65 wt% Pb/SiO₂ catalyst was obtained.

### Comparative Example 2

A 1 wt% Pd - 0.65 wt% Pb/SiO₂ catalyst was obtained by the same steps as in Comparative Example 1 except that the reduction treatment following the calcination was carried out at 600°C.

The catalysts produced in above Example 1 and Comparative Examples 1 and 2 were subjected to TEM observation, and for each of the catalysts, 100 observed metal particles were subjected to diameter measurement to derive a mean particle size. Consequently, the mean particle size of the catalyst of Example 1 was found to be 2.5 nm, and that of the catalyst of Comparative Example 2 was 12.8 nm. However, the catalyst of Comparative Example 1 was too small in particle size to derive the mean value of the particles sizes. Thus, the catalysts permitting observation of metal particles, according to Example 1 and Comparative Example 2, each were subjected to analysis of the compositions of a plurality of metal particles, to obtain the results shown in Table 1.

### Table 1

### Example 1

| Point | Particle size | Pd (at%) | Pb (at%) |
|---|---|---|---|
| 1 | 2.8 | 73.2 | 26.8 |
| 2 | 2.5 | 75.1 | 24.9 |
| 3 | 2.6 | 72.1 | 27.9 |
| 4 | 2.4 | 76.5 | 23.5 |
| 5 | 2.5 | 77.5 | 22.5 |
| 6 | 2.4 | 72.1 | 27.9 |
| 7 | 2.3 | 75.1 | 24.9 |
| 8 | 2.5 | 70.2 | 29.8 |
| 9 | 2.1 | 77.8 | 22.2 |
| 10 | 2.8 | 71.2 | 28.8 |

### Comparative Example 2

| Point | Particle size | Pd (at%) | Pb (at%) |
|---|---|---|---|
| 1 | 5.1 | 85.1 | 14.9 |
| 2 | 20.3 | 48.6 | 51.4 |
| 3 | 14.2 | 60.2 | 39.8 |
| 4 | 8.3 | 95.9 | 4.1 |
| 5 | 18.2 | 78.6 | 21.4 |
| 6 | 10.4 | 70.1 | 29.9 |
| 7 | 12.1 | 82.2 | 17.8 |
| 8 | 9.6 | 68.9 | 31.1 |
| 9 | 10.2 | 70.1 | 29.9 |
| 10 | 16.3 | 87.2 | 12.8 |

| | | | |
|---|---|---|---|
| * Peaks of Si and O due to SiO₂ were also observed, and the listed values were derived by omitting the values due to Si and O. | | | |

Now, the above results will be examined below. The metal particle size difference between the catalysts of Comparative Examples 1 and 2 is ascribable to the different heat treatment temperatures (reduction temperatures). In this respect, for the catalysts in which atomic metals are supported as in these Comparative Examples, the alloy compositions can be made to approach the target compositions by sintering metal particles through elevating the heat treatment temperature. However, as can be seen from the results shown in Table 1, Comparative Example 2 adopting an elevated heat treatment temperature failed to attain uniform compositions of metal particles even when the metal particles were made coarse and large so as to have the mean particle size of the order of 12.8 nm. In other words, with the methods for producing a catalyst in these Comparative Examples in which an atomic metal was supported, an insufficient heat treatment resulted in supporting of an almost atomic metal to yield a catalyst insufficient in particle size and alloying; alternatively, an elevated heat treatment temperature accelerated the sintering to promote alloying, but no metal particles having uniform compositions were successfully obtained although alloying was achieved; and additionally, a further elevated heat treatment temperature would lead to a fear that sintering is made to proceed excessively to make the particles coarse and large and consequently the effective surface area is decreased to degrade the activity.

On the contrary, in the catalyst according to present Example, there were supported metal particles having appropriate particle sizes of approximately 2 nm and additionally the compositions of the metal particles were uniform. Consequently, the method according to present Example can be said to be an excellent method in the sense that metal particles can simultaneously be made fine in size and uniform in composition.

### Example 2

A 30% aqueous solution of polyethyleneimine (average molecular weight: 70000) was weighed out in an amount of 69.68 g (485.32 mmol), added with nitric acid to regulate the pH to be 6.0 and then diluted with water to prepare a 200 mL aqueous solution. Next, into this solution (at room temperature under stirring), 21.98 g (5.13 mmol) of a dinitrodiammineplatinum nitrate solution (Pt content: 4.55% by weight) was dropped at room temperature under stirring at a rate of 1 mL/min. Herewith, there occurred a ligand exchange reaction between dinitrodiammineplatinum and PEI to form a PEI-platinum complex. Then, into this PEI-platinum complex solution, a solution in which 50.45 g (116.2 mmol) of cerium nitrate hexahydrate was dissolved in 200 mL of water was dropped at a rate of 1 mL/min and the solution thus obtained was stirred. Thus, a PEI-platinum/cerium composite complex was formed.

On the other hand, 79.0 g of alumina as the carrier was dispersed in water to prepare a 250 mL homogeneous slurry, and then the slurry was heated. Into this slurry, the solution of the PEI-platinum/cerium composite complex was dropped. This dropping was carried out in such a way that the dropping amount was regulated to compensate the water evaporation caused by heating the slurry and the slurry amount was thereby maintained at 250 mL. After the composite complex solution was dropped, the slurry was evaporated to dryness, and thus the composite complex was supported on alumina.

The alumina obtained by evaporation to dryness was dried in air at 110°C overnight, and then fired at 450°C for 2 hours. By carrying out the above described steps, a 1 wt% Pt - 20 wt% CeO₂/Al₂O₃ catalyst was obtained.

### Comparative Example 3

In 200 mL of water, 50.45 g of cerium nitrate hexahydrate was dissolved. In 200 mL of water, 79.0 g of alumina was dispersed, and this dispersion liquid was added with the aqueous solution of cerium nitrate. The dispersion liquid was evaporated to dryness on a water bath, dried in air at 110°C overnight, and then calcined in air at 450°C for 2 hours. Thus, a catalyst in which cerium oxide was supported on alumina was formed.

The above catalyst was again dispersed in 200 mL of water, and then into this dispersion liquid, 21.98 g of the dinitrodiammineplatinum nitrate solution was dropped, and the mixture thus obtained was stirred for 1 hour to support platinum by adsorption. Then, the mixture was filtered, and the alumina thus treated was dried in air at 110°C overnight, and calcined in air at 450°C for 2 hours to yield a 1 wt% Pt - 20 wt% CeO₂/Al₂O₃ catalyst.

The catalysts according to Example 2 and Comparative Example 3 were subjected to TEM-EDX measurement for arbitrary measurement points on each of the catalysts, and the results thus obtained are shown in Table 2.

### Table 2

### Example 2

| Point | Pt (wt%) | Ce (wt%) | Al (wt%) |
|---|---|---|---|
| 1 | - | - | 100.0 |
| 2 | 0.5 | 6.1 | 93.4 |
| 3 | - | - | 100.0 |
| 4' | 4.6 | 60.2 | 35.2 |
| 5 | 3.2 | 43.5 | 53.3 |
| 6 | - | 2.1 | 97.9 |
| 7 | 2.9 | 51.3 | 45.8 |
| 8 | - | - | 100.0 |
| 9 | 1.6 | 25.1 | 73.3 |
| 10 | - | 3.1 | 96.9 |

### Comparative Example 3

| Point | Pt (wt%) | Ce (wt%) | AI (wt%) |
|---|---|---|---|
| 1 | 1.3 | - | 98.7 |
| 2 | 0.2 | 62.1 | 37.7 |
| 3 | 1.1 | - | 98.9 |
| 4 | - | 50.6 | 49.4 |
| 5 | 0.8 | 2.1 | 97.1 |
| 6 | - | 21.3 | 78.7 |
| 7 | 1.4 | 8.9 | 89.7 |
| 8 | - | 40.8 | 59.2 |
| 9 | 1.3 | - | 98.7 |
| 10 | 1.2 | - | 98.8 |

| | | | |
|---|---|---|---|
| * The listed values were derived by omitting the elements other than the three listed elements. | | | |

Now, the above results will be examined below. In Comparative Example 3, the presence of platinum was identified everywhere on the catalyst to reveal that platinum was supported both on alumina and on ceria. On the contrary, in Example 2, platinum was found only in proximity to ceria, and platinum was not found alone anywhere on alumina. In this platinum-ceria catalyst, the function of ceria is attained through platinum, so that platinum is preferably found only in proximity to ceria. From this viewpoint, the catalyst according to Comparative Example 3 had here and there the spots where platinum was supported alone, so it can be said that platinum was not efficiently supported. On the other hand, the method according to present Example allowed platinum to be efficiently supported in proximity of ceria. Consequently, it has been verified that the present invention is also suitable for production of a catalyst required to support a plurality of elements in proximity to each other.

Finally, according to the methods of Examples 1 and 2, there were prepared the catalysts shown in Table 3 each of which included a precious metal and one of various typical elements or one of various rare earth elements. In Table 3, "the catalysts to target alloying" means the catalysts produced by carrying out the same steps as in Example 1, for which after supporting the composite complex on the carrier, reduction and calcination were carried out. Alternatively, "the catalysts to target proximal supporting" means the catalysts produced by carrying out the same steps as in Example 2, and no reduction treatment was carried out.

### Table 3

### Catalysts to target alloying

| Catalyst | Raw materials of composite complex | | | Catalyst particle size |
|---|---|---|---|---|
| | precious metal | Typical element/rare earth | Polymer compound | |
| Pt-Bi/SiO₃ | Dinitrodiammine platinum | Bismuth nitrate hydroxide | PEI Molecular weight 50000 | 2.7 nm |
| Pt-In/SiO₃ | Dinitrodiammine platinum | Indium nitrate n-hydrate | PEI Molecular weight 50000 | 2.9 nm |
| Pt-Sm/SiO₃ | Dinitrodiammine platinum | Samarium nitrate hexahydrate | PEI Molecular weight 50000 | 2.7 nm |
| Pt-Te/SiO₃ | Dinitrodiammine palladium | Telluric acid | PEI Molecular weight 50000 | 2.1 nm |
| Pt-Sn/SiO₃ | Dinitrodiammine palladium | Tin chloride pentahydrate | PEI Molecular weight 50000 | 2.5 nm |

### Catalysts to target proximal supporting

| Catalyst | Raw materials of composite complex | | | Proximal supporting |
|---|---|---|---|---|
| | precious metal | Typical element/rare earth | Polymer compound | |
| Pt-La/Al₂O₃ | Dinitrodiammine platinum | Lanthanum nitrate hexahydrate | PEI Molecular weight 2000 | Good |
| Pt-Pr/Al₂O₃ | Dinitrodiammine platinum | Promethium nitrate hexahydrate | PEI Molecular weight 10000 | Good |
| Pt-Sm/Al₂O₃ | Dinitrodiammine platinum | Samarium nitrate hexahydrate | PEI Molecular weight 70000 | Good |
| Pd-Nd/Al₂O₃ | Dinitrodiammine palladium | Neodymium nitrate hexahydrate | PEI Molecular weight 10000 | Good |
| Pd-Eu/Al₂O₃ | Dinitrodiammine palladium | Europium nitrate hexahydrate | PEI Molecular weight 50000 | Good |
| Pt-B/SiO₃ Pt-B/StO₃ | 2-Aminoacetic acid coordinated platinum | Boric acid Boric acid | Polyvinyl alcohol Molecular weight 100000 | Good |
| Pt-Al/SiO₃ | Dinitrodiammine platinum | Sodium aluminate | PEI Molecular weight 50000 | Good |

As can be seen from Table 3, among the catalysts produced according to the same methods as in Examples 1 and 2, the catalysts to target alloying have catalyst particles supported with appropriate particle sizes, and the compositions thereof were verified to be uniform in the same manner as in Example 1; and the catalysts to target proximal supporting, in the same manner as in the results of Example 2, the precious metals (platinum and palladium) were supported only in proximity of the spots supporting the typical element or the rare earth element, thus verifying that targeted states were able to be obtained.

## Claims

1. A method for producing a catalyst in which a porous carrier made of one or more metal oxides or carbon supports thereon catalyst particles comprising one or more precious metals and one or more typical elements or rare earth metal elements or oxides of these elements and comprising 10 to 50000 atoms in total, the method comprising the following steps of:
(1) forming a composite complex in which the precious metal(s) and the typical element(s) or the rare earth metal element(s) are bonded to the polymer compound through coordination bonding, ionic bonding or covalent bonding, the composite complex comprising 10 to 50000 atoms in total in one molecule thereof, by reacting a water soluble polymer compound with ions of the precious metal(s) and ions of the typical element(s) or the rare earth metal element(s);
(2) supporting the composite complex on the porous carrier; and
(3) calcining and/or reducing the porous carrier with the composite complex supported thereon.

2. The method for producing a catalyst according to claim 1, wherein the step of forming the composite complex is a step in which a solution comprising the polymer compound is mixed with salt(s) of the precious metal(s) or a solution of the salt(s) of the precious metal(s), and thereafter, mixed with salt(s) of the typical element(s) or the rare earth metal element(s) or a solution of the salt(s) of the typical element(s) or the rare earth metal element(s).

3. The method for producing a catalyst according to claim 1 or 2, wherein the step of supporting the composite complex on the porous carrier is a step in which a solution comprising the composite complex is mixed with a solution comprising the porous carrier.

4. The method for producing a catalyst according to any one of claims 1 to 3, wherein the porous carrier with the composite complex supported thereon is calcined, and subsequently reduced.

5. The method for producing a catalyst according to any one of claims 1 to 3, wherein the porous carrier with the composite complex supported thereon is reduced, and subsequently calcined.

6. The method for producing a catalyst according to any one of claims 1 to 5, wherein the polymer compound has in the molecule thereof at least any one of a nitrogen atom, a carboxyl group, a carbonyl group and an alcohol group.

7. The method for producing a catalyst according to claim 6, wherein the polymer compound is polyacrylic acid, polymethacrylic acid, polyethyleneimine, polyallylamine, polyvinyl alcohol, poly(N-carboxymethyl)ethyleneimine, poly(N,N-dicarboxymethyl)allylamine or a copolymer comprising at least one or more of these.

8. The method for producing a catalyst according to claim 6, wherein the polymer compound is a polyamino acid or a polysaccharide.

9. The method for producing a catalyst according to any one of claims 1 to 8, wherein the precious metal is at least any of platinum, palladium, rhodium, ruthenium, silver, gold and iridium.

10. The method for producing a catalyst according to any one of claims 1 to 9, wherein the typical element is gallium, germanium, arsenic, selenium, indium, tin, antimony, tellurium, thallium, lead, bismuth or polonium.

11. The method for producing a catalyst according to any one of claims 1 to 9, wherein the rare earth element is lanthanum, cerium, neodymium, promethium, samarium, europium, gadolinium, terbium, dysprosium, holmium, erbium, thulium, ytterbium or lutetium.
